# EUROPEAN PATENT APPLICATION

(11) **EP 4 796 835 A1**
(43) Date of publication of application: **26.08.2026**
(21) Application number: 25158880.2
(22) Date of filing: 19.02.2025
(51) Int. Cl.: F21V 8/00, B60Q 1/00, B32B 17/10

(54) **INTERLAYER WITH IMPROVED SURFACE ROUGHNESS FOR ILLUMINABLE LAMINATED GLAZING**

(71) Applicant: Kuraray Europe GmbH, 65795 Hattersheim am Main (DE)
(72) Inventor: Janßen, Christian, 65795 Hattersheim am Main (DE); Lellig, Philipp, 50670 Köln (DE)
(74) Representative: Janßen, Christian Oliver

(57) **Abstract**

Described is an interlayer for an illuminable laminated glazing comprising a polyvinyl acetal, 22.0 to 45.0 % by weight of at least one plasticizer and a functional layer on at least one surface comprising light scattering particles with an improved surface roughness.

## Description

Described is an interlayer for an illuminable laminated glazing comprising a polyvinyl acetal with a functional layer comprising light scattering particles with an improved surface roughness.

Traditional vehicle roof lights often suffer from uneven light distribution, resulting in bright spots and reduced aesthetic appeal. The integration of light scattering particles in vehicle lighting has been recognized as a potential solution to achieve a more homogeneous and aesthetic illumination. These particles are strategically distributed in the glazing to scatter incoming light from a light source, thereby providing a soft, diffused lighting effect across the vehicle's cabin. The particles can be coated onto the glass directly or they are embedded in or applied onto the surface of the interlayer in case laminated glass is used for the vehicle roof window. The particles can also be coated or printed onto the interlayer in form of certain patterns to allow for the lighting to light up in certain shapes, e.g. the car manufacturers logo.

WO 2021/005162 A1 describes interlayers with light scattering particles printed on the surface of thin, relatively stiff polyvinyl butyral films - the usual material for interlayers for laminated glass - with a smooth surface. The stiffness as well as the low surface roughness allow for a very high resolution printing and thus, a clear, high-resolution and highly aesthetic shape of the illuminated patterns.

For certain applications however, the glass industry prefers a simpler and thus, more economical technology to introduce illuminated glazing while maintaining at least a good level of optical quality.

One possibility to achieve this goal would involve printing the light scattering particles directly onto a conventional polyvinyl butyral interlayer used for the production of laminated glass. Such conventional interlayers generally have a regular surface pattern embossed onto both surfaces of the interlayer to allow for de-airing of the glass-interlayer-glass stack during the lamination process. However, printing the particles onto such rough, conventional surfaces has led to undesirable results in the printing quality and thus, the illuminated pattern.

On the other hand, simple reduction of the roughness of the surface - generally expressed by the roughness parameter Rz - might optimize the appearance of the illumination but leads to unfavourable behaviour during the lamination due to incomplete de-airing.

Thus, the objective of the present invention was to provide an illuminated roof light for vehicles that offers uniform light distribution, enhanced aesthetic appeal, improved passenger experience, as well as a glazing with lower production costs, raw material costs and/or an improved environmental footprint.

The current inventors have found that the optical quality of the illumination can be substantially improved while maintaining good de-airing properties by using a stochastic surface roughness on the surface comprising the light-scattering particles, i.e. a surface roughness that is not created by embossing a regular, usually trench-like pattern into the surface but by creating a random surface pattern. Additionally, the surface roughness should be controlled on the surface bearing the light scattering particles to a lower level to further improve the optical quality of the illuminated laminated glass. It has been surprisingly found that even with such a rather low level of surface roughness, good de-airing properties can still be maintained.

Therefore, one aspect of the present invention concerns an interlayer for an illuminable laminated glazing comprising a polyvinyl acetal, 10.0 to 45.0 % by weight of at least one plasticizer and a functional layer comprising light scattering particles on a first surface, wherein the first surface comprising the functional layer has a stochastic surface roughness with a maximum roughness Rz of equal to or below 20 µm measured in accordance with EN ISO 4287:2010-07. Preferably, Rz is equal to or below 18, more preferably equal to or below 17 , even more preferably equal to or below 16 and most preferably equal to or below 15 µm measured in accordance with EN ISO 4287:2010-07. Also preferably, the first surface comprising the functional layer has a stochastic surface roughness with a maximum roughness Rz of from 1 to 15 µm or from 0.1 to 10 µm or from 1 to 5 µm.

The term "stochastic" shall denote that the surface roughness does not show a regular pattern, e.g. a trench-like pattern with regular grooves, which are often formed in an embossing step to improve de-airing properties especially in interlayers for automotive glass. Instead, the surface shall have a random pattern which is generally created directly in the extrusion step by a process called melt fracture or by embossing the polyvinyl acetal films with a embossing roll having a random pattern, e.g. a pattern created by sandblasting the surface of the roll.

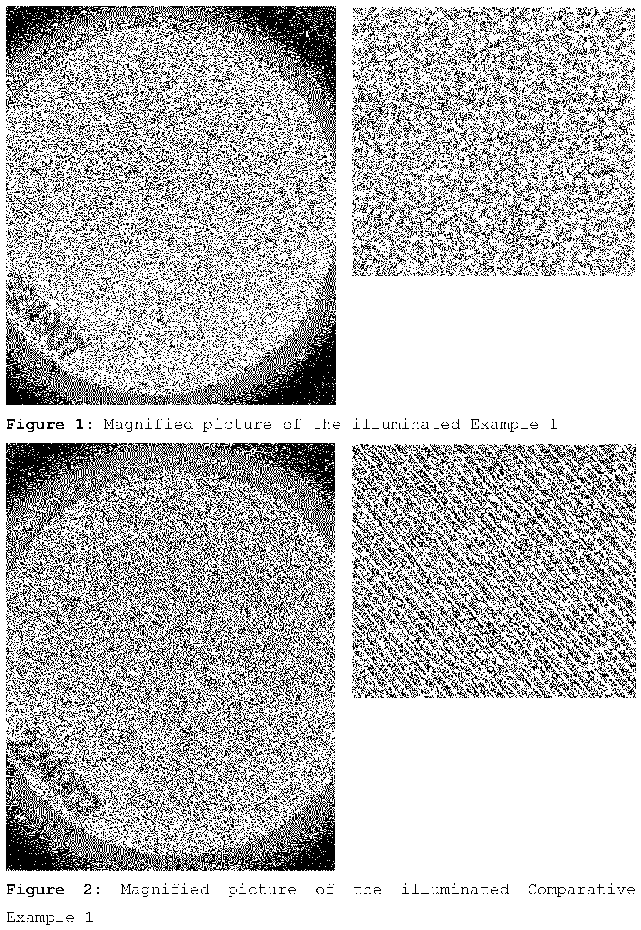

The surface roughness is given as the parameter "maximum roughness Rz" which is measured in accordance with EN ISO 4287:2010-07:2010-07. The parameter Rz is also called
Figure 1 shows an illuminated laminated glass made with an interlayer film according to the invention.
Figure 2 Figure 1 shows an illuminated laminated glass made with an interlayer film not according to the invention.

As can be seen, the laminated glass according to the invention is much more pleasant to the eye as a more regular optical appearance is achieved.

Preferably, the second surface which is opposite the first surface comprising the functional layer has a maximum roughness Rz from 10 to 100 µm, more preferably from 20 to 80 µm, even more preferably from 25 to 70 µm, even more preferably from 30 to 60 µm and most preferably from 35 to 55 µm measured in accordance with EN ISO 4287:2010-07.

By adjusting the roughness of the second surface, the de-airing can be properly achieved during the lamination step while the good optical properties are maintained.

Preferably, the first surface comprising the functional layer has a stochastic surface roughness with a maximum roughness Rz of from 1 to 15 µm and the second surface which is opposite the first surface comprising the functional layer has a maximum roughness Rz from 20 to 80 µm measured in accordance with EN ISO 4287:2010-07.

Preferably, the ratio Rz (second surface)/ Rz (first surface) is equal to or above 2, more preferably equal to or above 2.5, even more preferably equal to or above 3 or 4.

Also preferably, the second surface also has a stochastic surface roughness, e.g. for ease of production of the films.

The light scattering particle are typically applied to the first surface of the interlayer films by means of a coating or printing process. In case of printing, they can be applied via techniques that are commonly known in the printing industry such as offset printing, rotogravure printing, flexography, screen-printing and inkjet printing, especially digital printing.

For forming the functional layer by printing, a printing ink consisting of 0.30 % by weight titanium dioxide (as light scattering particles) with a particle size D50 of 0.15 µm determined by laser diffraction method according to DIN 13320, 27.0 % by weight of poly(methyl methacrylate) (PMMA) (as matrix material) and 36.3 % by weight of 2-butoxyethanol acetate and 36.3 % by weight of cyclohexanone (as sacrificial solvents), is most preferable chosen.

The thickness of the functional layer is preferably 0.1 µm to 20 µm, more preferably 0.5 µm to 10 µm or 0.1 to 1.0 µm
The functional layer preferably comprises the light scattering particles and at least one matrix material. Suitable matrix materials include polymers in which the light scattering particles can be homogenously dispersed without decomposition. Preferably, the matrix material comprises homo- or copolymers of (meth)acrylate, methyl methacrylate, poly(vinyl) acetal, nitro cellulose, polystyrene, polyvinyl alcohol, polyurethane, poly carbonate and polyvinyl chloride. Most preferably, the matrix material is polyvinyl butyral.

Further components might be present in the functional layer. Examples of further components include co-resins, solvents, UV absorber, UV-stabilizer, cross-linker, curing agents, accelerants, photo-initiators, surfactants, stabilizers, filler, thixotropic modifiers and plasticizers.

Light scattering materials known in the art can be employed. Preferably, the light scattering particles are chosen from the group consisting of TiO₂, ZnO, Al₂O₃, ZrO₂, PbSO₄, BaSO₄, CaCO₃, glass, polymers and mixtures thereof. The light scattering particles can be used as solid or hollow beads or fibres.

Preferably, the light scattering particles are present in the functional layers in an amount of 0.1 to 10 % by weight, more preferred 0.2 to 5 % by weight, most preferably 0.25 to 1 % by weight.

Also preferably, the light scattering particles have a median particle size D50 by volume determined by the laser diffraction method according to DIN 13320 of equal to or more than 0.001, more preferably 0.01 µm, 0.05 µm or 0.1 µm. Also preferably the D50 is less than 1.0 µm, more preferably less than 0.75 µm, even more preferably less than 0.5 µm. Preferably, the median particle size by volume determined by the laser diffraction method according to DIN 13320 is equal to or more than 0.1 µm and equal to or less than 1.0 µm.

Preferably, the light scattering particles are present in the functional layers in form of a concentration gradient, i.e. concentration of functional particles in the functional layers varies depending on the distance to the light source. More preferably, the concentration of light scattering particles in the functional layers increases with an increasing distance to the nearest light source.

Preferably, the functional layers covers only part of the polymer interlayer films. Thus, the functional layers can be applied in form of specific patterns. This embodiment is especially useful for informative and/or decorative glazing for aircrafts, trains or ships and for use in the construction area, especially for shop windows, elevators or facade glazing.

Preferably the functional layer is printed or coated in a pattern consisting of discrete objects, more preferably the pattern is a linear pattern.

Without wanting to be bound to a theory, it is believed that of the discrete objects are printed in the linear pattern they assist in the de-airing during the lamination step, i.e. the pattern of the light-scattering particles mimics the effect of the regular grooves usually imparted into the surface of the polyvinyl acetal films by embossing.

In order to allow for privacy as well as sun and heat protection of the passengers, the interlayer preferably has a light transmission TL (380 to 780 nm) based on DIN EN 410 on a test laminate using two standard panes of clear glass from 5 to 95%, more preferably from 10 to 85% and most preferably from 25 to 75%. Also preferably, the interlayer is grey, e.g. by addition of carbon black to the interlayer.

Preferably, the interlayer film comprises 10 to 45.0 % by weight, more preferably 12.5 to 40 % by weight and even more preferably 15 to 35 % by weight of at least one plasticizer.

Suitable plasticizers include one or more compounds selected from the following groups:
- esters of polyvalent aliphatic or aromatic acids, for example dialkyl adipates, such as dihexyl adipate, dioctyl adipate, hexyl cyclohexyl adipate, mixtures of heptyl adipates and nonyl adipates, diisononyl adipate, heptyl nonyl adipate, and esters of adipic acid with cycloaliphatic ester alcohols or ester alcohols containing ether compounds, dialkyl sebacates, such as dibutyl sebacate, and also esters of sebacic acid with cycloaliphatic ester alcohols or ester alcohols containing ether compounds, esters of phthalic acid, such as butyl benzyl phthalate or bis-2-butoxyethyl phthalate.

- esters or ethers of polyvalent aliphatic or aromatic alcohols or oligo ether glycols with one or more unbranched or branched aliphatic or aromatic substituents, for example esters of glycerol, diglycols, triglycols or tetraglycols with linear or branched aliphatic or cycloaliphatic carboxylic acids;
- phosphates with aliphatic or aromatic ester alcohols, such as tris(2-ethylhexyl)phosphate (TOF), triethyl phosphate, diphenyl-2-ethylhexyl phosphate, and/or tricresyl phosphate
- esters of citric acid, succinic acid and/or fumaric acid.

Particularly preferred are 1,2-cyclohexane dicarboxylic acid diisononyl ester (DINCH) or triethylene glycol-bis-2-ethyl hexanoate (3GO or 3G8).

In addition, the interlayer may contain further additives, such as residual quantities of water, UV absorber, antioxidants, adhesion regulators, optical brighteners or fluorescent additives, stabilisers, colorants, processing aids, inorganic or organic nanoparticles, pyrogenic silicic acid and/or surface active substances.

The thickness of the interlayer films before lamination is preferably 250 to 2500 µm, more preferably 300 to 1600 µm, more preferably 380 - 1200 µm and most preferably 600 to 900 µm or 350 to 450 µm.

Another aspect of the present invention concerns a process for the production of the inventive interlayer comprising a step of extruding a mixture of the polyvinyl acetal, the plasticizer and optionally, other components, under melt fracture conditions wherein the lip temperature of the lip being in touch with the first surface is at least 30 °C higher than the lip temperature of the lip being in touch with the second surface.

Preferably, the process comprises a step of coating or printing the light scattering particles on the first surface of the interlayer.

"Melt fracture" as used herein shall refer to a phenomenon where the extrudate exhibits a jagged or irregular surface. This typically occurs when the polymer melt sticks to the die lips and then slips as the pressure builds up, leading to distortions on the surface of the extruded material. In this process, the roughness of the surface can be controlled by adjusting the die lip temperature, a higher temperature leading to less stochastic surface roughness.

In another aspect the present invention concerns an illuminable laminated glazing comprising the inventive interlayer between two rigid sheets. Preferably, the outer sheet of rigid material is coloured and/or provided with an IR-reflecting or absorbing coating.

Preferably, the rigid material is a rigid polymer like PET, polycarbonate or PMMA. However, most preferably the rigid material is glass.

Also preferably, the laminated glazing further comprises a light source and an optical connector in contact with a sheet of rigid material. The light source can also emit the light through hole in the rigid material and/or be guided into the glazing by means of optical elements, e.g. prisms. The light source may be any conventional light source, preferably it is an LED light source.

### Examples

### Preparation of the interlayer films

### Example 1

A PVB film was produced by film extrusion using a Leistritz corotating double-screw extruder. The die lip temperature of the die lip in contact with the first surface was set to 210 °C and the other die lip temperature of the die lip in contact with the second surface was set to 164 °C. The film was extruded through a flat slit die with a slit width of 1100 mm and cooled down in a water basin.

### Comparative Example 1

For comparison, a commercially available PVB film (Trosifol V200 E2 from Kuraray Europe GmbH) having two rough surfaces produced by embossing was used.

### Printing

TiO2 particles are used as light scattering particles. A commercially available TiO2-based UV-curable ink for ink jet printing was used. The ink was printed onto the first surface of the PVB film produced above using a commercially available ink jet printer available from Durst Group AG.

### Preparation of the glass laminates

Glass laminates were produced using the printed PVB films sandwiched between two conventional 2.1 mm automotive grade soda lime glasses (OptiFloat^{®}). The sandwiches were placed in vacuum bags in an oven at 120 °C for 30 min to produce pre-laminates. Lamination was then accomplished by using an autoclave with industry-standard conditions (90 min total; comprising 30 min hold time at 140 °C and 12 bar).

### Measurement of the surface roughness

The maximum roughness Rz was measured according to EN ISO 4287:2010-07 in the non-printed areas.

### Measurement of the haze

The haze value according to ASTM 1003 procedure B was measured on glass laminates using a UltraScan Pro spectrophotometer in a geometry of 2° and illuminant type C.

### Image acquisition of illuminated laminates

An LED bar was attached to one edge of the laminates in such a way that the distance between the LED bar and the printed area was exactly the same for both samples. When the LED bar was lit up, pictures of the printed area were taken through a loupe to characterize the morphology.

Furthermore, a camera was mounted on a tripod to fix the distance between the camera and the laminate. When the LED bar was lit up, pictures were taken at an exposure time of 0.02 seconds.

To compare the brightness of the illuminated area of both samples, the pictures were converted to 8-bit greyscale color depth using the software ImageJ and the average greyscale level was calculated using an area of 1 x 1 inch.

### Results

| | Example 1 | Comparative Example 1 |
|---|---|---|
| Roughness Rz / µm First surface | 15 | 40 |
| Roughness Rz / µm Second surface | 55 | 42 |
| Haze / % | 8.44 | 10.66 |
| Greyscale level | 137 | 135 |

## Claims

1. An interlayer for an illuminable laminated glazing comprising a polyvinyl acetal, 10.0 to 45.0 % by weight of at least one plasticizer and a functional layer comprising light scattering particles on a first surface, wherein the first surface comprising the functional layer has a stochastic surface roughness with a maximum roughness Rz of equal to or below 20 µm measured in accordance with EN ISO 4287:2010-07.

2. The interlayer according to claim 1 wherein the first surface comprising the functional layer has a stochastic surface roughness with a maximum roughness Rz of equal to or below 15 µm measured in accordance with EN ISO 4287:2010-07.

3. The interlayer according to claim 1 or 2 wherein a second surface which is opposite the first surface comprising the functional layer has a maximum roughness Rz from 20 to 80 µm.

4. The interlayer according to any one of the claims above wherein the ratio Rz (second surface)/ Rz (first surface) is equal to or above 2.

5. The interlayer according to any one of the claims above wherein the second surface has a stochastic surface roughness.

6. The interlayer according to any one of the claims above wherein the light scattering particles are chosen from the group consisting of TiO2, ZnO, Al2O3, ZrO2, PbSO4, BaSO4, CaCO3, glass, polymers and mixtures thereof.

7. The interlayer according to any one of the claims above wherein the functional layer comprises light scattering particles and a binder and is printed or coated onto the at least one surface.

8. The interlayer according to any one of the claims above wherein the functional layer is printed or coated in a pattern consisting of discrete objects.

9. The interlayer according to claim 8 wherein the pattern is a linear pattern.

10. The interlayer according to any one of the claims above wherein the thickness of the functional layer is from 0.5 µm to 10 µm.

11. The interlayer according to any one of the claims above wherein the first surface comprising the functional layer has a stochastic surface roughness with a maximum roughness Rz of from 1 to 15 µm and the second surface which is opposite the first surface comprising the functional layer has a maximum roughness Rz from 20 to 80 µm measured in accordance with EN ISO 4287:2010-07.

12. A process for the production of the interlayer according to any one of the claims above comprising a step of extruding a mixture of the polyvinyl acetal, the plasticizer and optionally, other components, under melt fracture conditions wherein the lip temperature of the lip being in touch with the first surface is at least 30 °C higher than the lip temperature of the lip being in touch with the second surface.

13. The process according to claim 12 comprising a step of coating or printing the light scattering particles on the first surface of the interlayer.

14. An illuminable laminated glazing comprising the interlayer according to any one of claims 1 to 11 between two rigid sheets.

15. The illuminable laminated glazing according to claim 14 wherein the outer sheet of rigid material is coloured and/or provided with an IR-reflecting or absorbing coating.
